# DEMANDE DE BREVET EUROPEEN

(11) **EP 3 070 911 A1**
(43) Date de publication de la demande: **21.09.2016**
(21) Numéro de dépôt: 15305413.5
(22) Date de dépôt: 20.03.2015
(51) Int. Cl.: H04L 29/12, H04L 12/24

(54) **PROCÉDÉ DE CONTRÔLE D'ACCÈS À UN RÉSEAU PRIVÉ**

(71) Demandeur: Ucopia Communications, 92120 Montrouge (FR); Université Pierre et Marie Curie, 75252 Paris Cedex 05 (FR)
(72) Inventeur: BORRAS, Patrick, 75010 Paris (FR); ROTROU, Julien, 75020 Paris (FR); VILLAIN, Benjamin, 75014 Paris (FR)
(74) Mandataire: CAPRI

(57) **Abrégé**

Procédé de contrôle d'accès à un réseau privé, comprenant les étapes suivantes:
- fournir au moins un équipement utilisateur, au moins un équipement SDN dans ledit réseau privé, ledit au moins un équipement SDN étant piloté par un contrôleur SDN, un serveur web de redirection disposé dans un réseau accessible par le contrôleur SDN, et un portail captif disposé à l'extérieur dudit réseau privé,
- lorsque ledit équipement utilisateur envoie un paquet d'établissement de connexion TCP (SYN) à un serveur web quelconque, ledit contrôleur SDN modifie les adresses MAC et IP de destinations dudit paquet d'établissement de connexion par les adresses dudit serveur web de redirection,
- lorsque ledit serveur web de redirection envoie sa réponse, ledit contrôleur SDN modifie les adresses MAC et IP de destinations du paquet retour TCP (SYN/ACK) pour les remplacer par les adresses dudit équipement utilisateur,
- lorsque ledit équipement utilisateur envoie une requête HTTP audit serveur web de redirection, ledit serveur web de redirection envoie une réponse HTTP contenant une URL,
- ledit contrôleur SDN détecte ladite réponse HTTP dudit serveur web de redirection et remplace ladite URL par une URL de redirection vers ledit portail captif, à laquelle il ajoute l'adresse MAC et l'adresse IP dudit équipement utilisateur.

## Description

La présente invention concerne un procédé de contrôle d'accès à un réseau privé, notamment dans le cadre de réseaux définis par logiciel pour l'implémentation de services réseaux.

La multiplication des réseaux Wi-Fi publics ces dernières années en France ou à l'étranger constitue un challenge dans le contrôle des accès à ces réseaux. Dans un souci de conformité avec les lois en vigueur ou bien simplement du contrôle des activités des utilisateurs sur le réseau, les propriétaires d'accès Internet publics ont l'obligation d'intégrer une solution de contrôle des accès utilisateurs ainsi qu'une journalisation de leur trafic. Dans ce cadre, il existe des propositions pour une solution protégeant un réseau privé de l'intérieur. Le produit se présente sous la forme d'un routeur placé sur le chemin des données de tous les utilisateurs du réseau. Il intercepte les flux web des utilisateurs non-connectés afin de leur afficher un portail captif sur lequel ils peuvent s'identifier. Une fois leur identité vérifiée, un ensemble de services réseaux configurés par l'administrateur lui est ouvert. De plus, l'ensemble du trafic de l'utilisateur au cours de sa session est enregistré à des fins légales (seules les métadonnées sont enregistrées et non le contenu).

Dans le cadre de l'évolution du "Cloud Computing" (informatique en nuage), des solutions hébergées à l'extérieur du réseau privé du client ont été développées et elles permettent aujourd'hui d'interagir avec des bornes Wi-Fi intelligentes afin de reproduire un contrôle des accès des utilisateurs. Afin de développer cette fonctionnalité, une intégration forte avec les constructeurs a dû être réalisée. Il est à noter que l'augmentation du nombre de constructeurs supportés est complexe et coûteuse.

D'un autre côté, le développement des technologies de SDN dans les réseaux laisse penser que dans un lapse de temps assez court, la plupart des équipements réseau vendus sur le marché du Wi-Fi et des commutateurs grand publics seront compatibles avec une technologie de SDN. Aujourd'hui le protocole qui émerge se nomme "OpenFlow" mais le procédé décrit dans ce brevet peut utiliser d'autres protocoles possédant certaines des propriétés décrites ici.

La présente invention a pour but de fournir un procédé de contrôle d'accès à un réseau privé qui ne reproduit pas les inconvénients susmentionnés.

Un objectif de la présente invention est de décrire un procédé reproduisant à l'aide d'un équipement générique SDN une des fonctionnalités clés pour proposer un portail captif externe à un réseau privé : la redirection des requêtes HTTP des utilisateurs non-connectés vers le portail captif. Cette redirection doit s'accompagner des informations réseau de l'équipement de l'utilisateur pour pouvoir l'identifier de manière unique.

Ce procédé peut être appliqué à n'importe quel protocole applicatif utilisant TCP comme couche de transport.

La présente invention a également pour but de fournir un procédé de contrôle d'accès à un réseau privé qui soit simple et peu coûteux à réaliser et à mettre en oeuvre.

La présente a donc pour objet un procédé de contrôle d'accès à un réseau privé, comprenant les étapes suivantes:
- fournir au moins un équipement utilisateur, au moins un équipement SDN dans ledit réseau privé, ledit au moins un équipement SDN étant piloté par un contrôleur SDN, un serveur web de redirection disposé dans un réseau accessible par le contrôleur SDN, et un portail captif disposé à l'extérieur dudit réseau privé,
- lorsque ledit équipement utilisateur envoie un paquet d'établissement de connexion TCP à un serveur web quelconque, ledit contrôleur SDN modifie les adresses MAC et IP de destinations dudit paquet d'établissement de connexion par les adresses dudit serveur web de redirection,
- lorsque ledit serveur web de redirection envoie sa réponse, ledit contrôleur SDN modifie les adresses MAC et IP de destinations du paquet retour TCP pour les remplacer par les adresses dudit équipement utilisateur,
- lorsque ledit équipement utilisateur envoie une requête HTTP audit serveur web de redirection, ledit serveur web de redirection envoie une réponse HTTP contenant une URL,
- ledit contrôleur SDN détecte ladite réponse HTTP dudit serveur web de redirection et remplace ladite URL par une URL de redirection vers ledit portail captif, à laquelle il ajoute l'adresse MAC et l'adresse IP dudit équipement utilisateur.

Avantageusement, lorsque ledit équipement utilisateur envoie un paquet d'établissement de connexion TCP à un serveur web quelconque, ledit contrôleur SDN modifie le champ Ethernet "adresse de destination" avec l'adresse MAC dudit serveur web de redirection.

Avantageusement, lorsque ledit équipement utilisateur envoie un paquet d'établissement de connexion TCP à un serveur web quelconque, ledit contrôleur SDN modifie le champ IP "adresse de destination" avec l'adresse IP dudit serveur web de redirection.

Avantageusement, le contrôleur SDN modifie les numéros de séquences et d'acquittements des paquets suivants la modification:
- le numéro de séquence des paquets envoyés par ledit serveur web de redirection est incrémenté par la différence entre la taille finale du paquet modifié et sa taille initiale;
- le numéro des acquittements envoyés par ledit équipement utilisateur est décrémenté par la même différence.

Avantageusement, ledit contrôleur SDN ajoute l'adresse MAC et l'adresse IP dudit équipement utilisateur à ladite réponse HTTP dudit serveur web de redirection comme paramètres GET de la requête HTTP.

Avantageusement, ledit contrôleur SDN communique d'une part avec ledit équipement utilisateur se trouvant derrière ledit équipement SDN, et d'autre part injecte des données dans les flux, notamment pour permettre d'injecter les informations réseau dudit équipement utilisateur dans l'URL de redirection.

Avantageusement, après redirection, ledit équipement utilisateur termine la connexion TCP avec ledit serveur web de redirection en envoyant un paquet TCP de fin de session avec un acquittement pour les données reçues.

Ces caractéristiques et avantages et d'autres apparaîtront plus clairement au cours de la description détaillée suivante, faite en référence aux dessins joints, donnés à titre d'exemples non limitatifs, et sur lesquels :

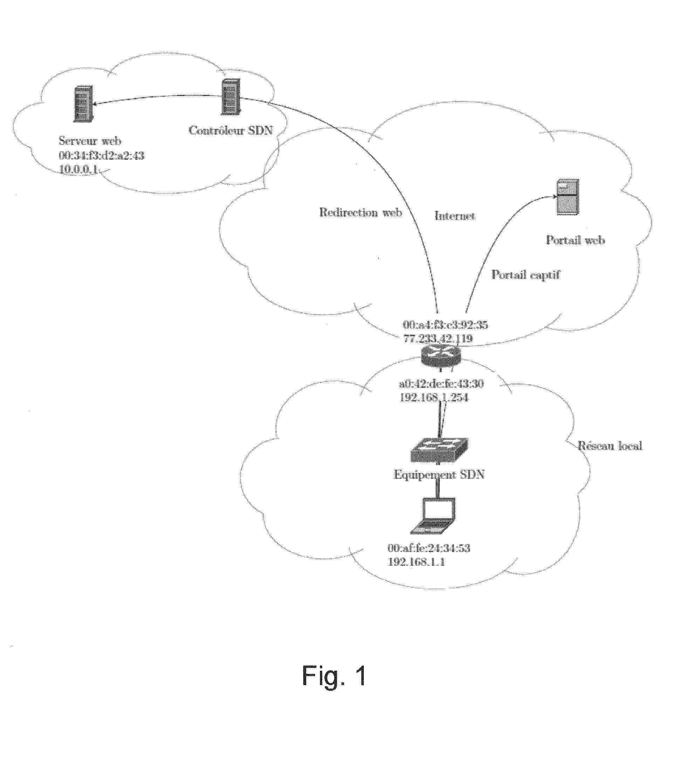

- la figure 1 est un schéma illustrant l'invention selon un mode de réalisation avantageux de la présente invention, et
- la figure 2 est un diagramme de séquences des opérations effectuées par le contrôleur OpenFlow, selon un mode de réalisation avantageux de la présente invention.

Les termes ci-après sont définis de la manière suivante:
SDN ("Software-Defined Networking"): nouveau paradigme d'architecture réseau où le plan de contrôle est totalement découplé du plan de données. Ce découplage permet de déployer le plan de contrôle sur des plateformes dont les capacités sont plus grandes que celles des commutateurs réseaux classiques.

Contrôleur SDN: dispositif capable de piloter des équipements compatibles à travers un réseau public ou privé. Il s'agit d'un programme exécuté sur un ordinateur connecté à un réseau. Le contrôleur est capable de récupérer toutes les informations des couches réseau basses des équipements connectés aux équipements SDN pilotés.

Equipement: système capable de communiquer avec un contrôleur SDN. Il doit notamment savoir identifier des flots et savoir leur appliquer des actions (tout ceci configuré par le contrôleur). L'équipement doit être capable d'envoyer des paquets émis par un équipement utilisateur vers le contrôleur. Ces paquets doivent être envoyés bruts, c'est-à-dire contenant tous les entêtes des différents protocoles.

Equipement utilisateur: équipement souhaitant accéder au réseau. Afin que l'équipement soit autorisé, il faut que l'utilisateur puisse s'authentifier sur un portail captif.

Portail captif: site web permettant de transmettre des données d'authentification, de les vérifier, et de notifier le contrôleur que l'équipement de l'utilisateur authentifié est autorisé. Il doit pour cela connaître les informations réseau de l'équipement de l'utilisateur afin que le contrôleur SDN puisse l'identifier.

Flot ("flow"): ensemble de paquets transitant sur le réseau ayant des caractéristiques similaires. Ces caractéristiques sont en général des champs d'en-tête de paquet vérifiant les mêmes propriétés. Par exemple il est possible de définir un flot contenant tous les paquets à destination de la même adresse IP. De même il est possible de définir un flot contenant tous les paquets du même service réseau à l'aide du port de destination utilisé.

OpenFlow: protocole réseau permettant de contrôler des équipements réseaux depuis un contrôleur central. Ce contrôleur est notifié de tous les paquets traversant les équipements qui ne sont pas matchés par des règles existantes. Il peut ensuite définir un ensemble de règles de filtrage afin de décider quoi faire de ce flot.

Règle: une règle définit un ensemble de conditions à vérifier sur un paquet pour entreprendre une ou plusieurs actions. Il est possible de définir des conditions sur un large ensemble de protocoles : Ethernet, IP, UDP, TCP, ICMP, etc. Les actions peuvent être de bloquer le paquet, de l'envoyer sur un port défini, de modifier un champ (adresse IP, VLAN) ou bien de le transmettre au contrôleur. De même le contrôleur peut à tout moment demander à un équipement d'envoyer un paquet sur un port précis.

NAT ("Network Address Translation"): traduction d'adresse réseau; en réseau informatique, on dit qu'un routeur fait du NAT lorsqu'il fait correspondre les adresses IP internes non-uniques et souvent non routables d'un intranet à un ensemble d'adresses externes uniques et routables. Ce mécanisme permet notamment de faire correspondre une seule adresse externe publique visible sur Internet à toutes les adresses d'un réseau privé

API ("Application Programming Interface"): interface de programmation; en informatique, API est un ensemble normalisé de classes, de méthodes ou de fonctions qui sert de façade par laquelle un logiciel offre des services à d'autres logiciels.

Adresse IP ("Internet Protocol"): numéro d'identification qui est attribué de façon permanente ou provisoire à chaque appareil connecté à un réseau informatique utilisant l'Internet Protocol. L'adresse IP est à la base du système d'acheminement (le routage) des messages sur Internet.

Adresse MAC ("Media Access Control"): identifiant physique stocké dans une carte réseau ou une interface réseau similaire. A moins qu'elle n'ait été modifiée par l'utilisateur, elle est unique au monde.

TCP ("Transmission Control Protocol"): protocole de contrôle de transmissions; protocole de transport fiable en mode connecté; une session TCP fonctionne en trois phases: l'établissement de la connexion, les transferts de données, et la fin de la connexion.

UDP ("User Datagram Protocol"): protocole de datagramme utilisateur; un des principaux protocoles de télécommunication utilisés par Internet; le rôle de ce protocole est de permettre la transmission de données de manière très simple entre deux entités, chacune étant définie par une adresse IP et un numéro de port. Contrairement au protocole TCP, il fonctionne sans négociation: il n'existe pas de procédure de connexion préalable à l'envoi des données.

Flags (drapeaux): les drapeaux représentent des informations supplémentaires: URG (le paquet doit être traité de façon urgente), ACK (accusé de réception), PSH (le paquet fonctionne suivant la méthode PUSH), RST (la connexion est réinitialisée), SYN (demande d'établissement de connexion), FIN (connexion interrompue).

HTTP ("Hypertext Transfer Protocol"): protocole de transfert hypertexte; protocole de communication client-serveur. HTTP est un protocole de la couche application. Il peut fonctionner sur n'importe quelle connexion fiable; dans les faits on utilise le protocole TCP comme couche de transport.

WWW ("World Wide Web"): système hypertexte public fonctionnant sur Internet. Le Web permet de consulter, avec un navigateur, des pages accessibles sur des sites.

URL ("Uniform Resource Locator"): localisateur uniforme de ressource; aussi désigné par le terme adresse web; désigne une chaîne de caractères utilisée pour adresser les ressources du World Wide Web.

Méthode: commande dans le protocole http spécifiant un type de requête, c'est-à-dire qu'elle demande au serveur d'effectuer une action. En général l'action concerne une ressource identifiée par l'URL qui suit le nom de la méthode.

GET: méthode la plus courante pour demander une ressource. Une requête GET est sans effet sur la ressource.

La présente invention a pour but de contrôler l'accès des utilisateurs à un réseau privé à l'aide d'un portail captif externalisé.

Un ou plusieurs équipements compatibles SDN se trouvent à l'intérieur du réseau privé entre les utilisateurs et la passerelle d'accès au réseau public (Internet). Ces équipements sont pilotés par un contrôleur SDN situé soit à l'intérieur du réseau privé, soit à l'extérieur. Le portail captif est hébergé à l'extérieur du réseau privé, ainsi toute communication émanant d'un équipement utilisateur à son intention est anonymisée par le mécanisme de NAT d'adresse IP de la passerelle. Autrement dit, le portail captif n'a aucun moyen technique de connaître les informations réseau (adresse IP et adresse MAC) de l'équipement utilisateur.

L'objectif est de permettre au portail captif de contrôler l'accès des utilisateurs du réseau privé en utilisant les API du contrôleur SDN. Celles-ci permettent notamment de définir des règles sur les équipements réseau locaux pouvant contrôler les flux les traversant. Le problème est ici que le portail captif ne possède pas assez d'information pour identifier un équipement du réseau local. Ainsi il n'est pas en mesure de construire des règles de filtrage ni d'identifier auprès du contrôleur un équipement à autoriser.

La problématique est de transmettre les informations réseau des équipements du réseau local au portail captif.

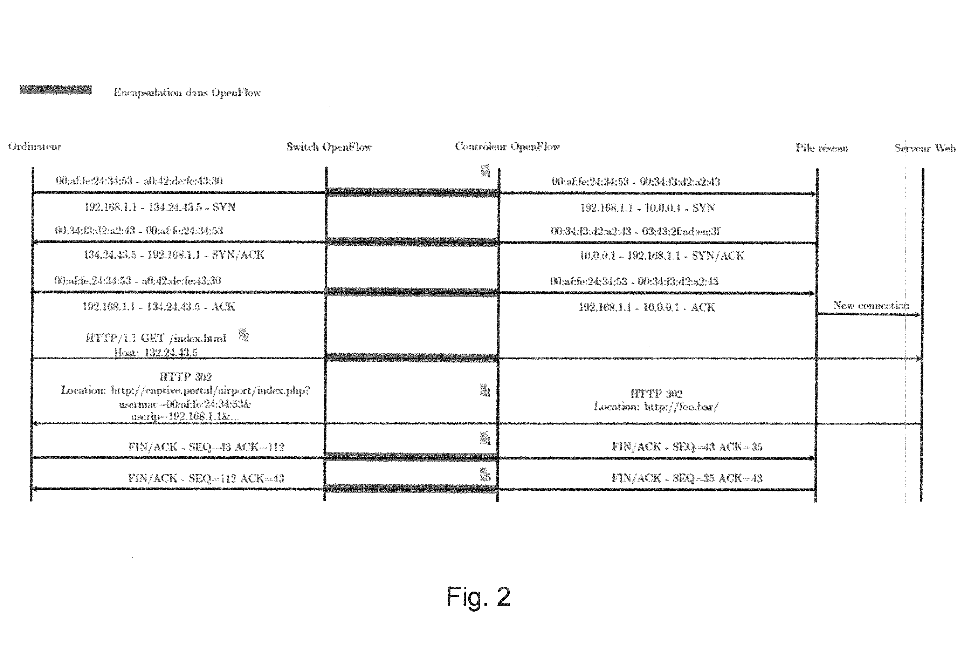

Un exemple de réalisation de la présente invention va être décrit ci-après, tout d'abord en référence au diagramme de la figure 2, et plus particulièrement aux points 1 à 5 identifiés sur ce diagramme.

Point 1: le contrôleur SDN ou OpenFlow modifie les adresses MAC et IP de destinations du paquet d'établissement de connexion TCP (flag SYN) afin qu'elles correspondent aux adresses de l'interface réseau de la machine sur laquelle est exécuté le serveur web de redirection. Dans cet exemple, le serveur web de redirection est hébergé dans le même sous-réseau que le contrôleur SDN. L'équipement utilisateur envoie le paquet à un serveur sur Internet ayant comme adresse IP 134.24.43.5, via sa passerelle qui a pour adresse MAC a0:42:de:fe:43:30, ces adresses sont remplacées par respectivement 10.0.0.1 et 00:34:f3:d2:a2:43. Les paquets retours vont subir l'opération inverse à savoir modifier les adresses MAC et IP de destinations pour les remplacer par les adresses de l'équipement utilisateur. En effet, le serveur web de redirection va envoyer sa réponse à sa passerelle de niveau 2 (03:43:2f:ad:ea:3f). De plus, l'adresse IP source des paquets retours devra être modifiée pour correspondre à l'IP du serveur demandé par l'équipement (ici 134.24.43.5). Ces transformations sont effectuées sur chaque paquet dans un sens comme dans l'autre.

Point 2: l'équipement utilisateur envoie une requête HTTP (protocol applicatif) au serveur web de redirection. Cette requête fait une taille de 43 octets.

Point 3: le serveur web de redirection est configuré pour ne répondre que par des réponses HTTP ayant le code 302 (redirection) et une URL choisie au hasard. Ici la réponse HTTP fait 35 octets. Le contrôleur OpenFlow identifie cette réponse et modifie le contenu du champ "Location:" pour le remplacer par une URL de redirection qu'il peut choisir comme il le souhaite. Il ajoute à cette URL les informations de l'équipement : son adresse MAC, son adresse IP et toute autre information complémentaire. Dans notre exemple, la réponse HTTP modifiée mesure maintenant 112 octets.

Point 4: l'équipement utilisateur termine la connexion TCP avec le serveur web de redirection car il va suivre la redirection. Il envoie donc un paquet TCP de fin de session (FIN) avec un acquittement pour les données reçues (ACK). Afin de ne pas rompre la cohérence des numéros de séquences et d'acquittements introduite par la modification de la réponse HTTP, le contrôleur OpenFlow modifie les numéros d'acquittements des paquets envoyés par l'équipement du client. Ici on voit que l'équipement acquitte jusqu'au segment 112 (ce qu'il a reçu) alors que le serveur de redirection n'a envoyé que 35 octets, donc on soustrait de cet acquittement la quantité de données ajoutée à la réponse HTTP (77 octets).

Point 5: De même dans l'autre sens, le serveur web de redirection va utiliser le numéro de séquence correspondant à ce qu'il a précédemment envoyé (ici 35). Or l'équipement a lui reçu 112 octets de données, il s'attend donc à recevoir un numéro de séquence supérieur ou égal à 112. Le contrôleur OpenFlow incrémente donc le numéro de séquence des paquets envoyés par le serveur de redirection de la quantité de données ajoutée dans la réponse HTTP.

De manière plus détaillée, la présente invention peut fonctionner de la manière suivante.

Pour commencer, les informations de l'équipement de l'utilisateur peuvent être communiquées au portail captif à l'aide d'une redirection HTTP. Lorsque l'utilisateur non-authentifié tente d'accéder à une page web quelconque, l'équipement SDN transmet les paquets bruts au contrôleur et celui-ci envoie une réponse contenant un code d'erreur HTTP 302 (redirection) et une URL vers laquelle le navigateur doit se rendre. Cette URL contient le nom de domaine du portail captif ainsi que toutes les informations nécessaires dans les paramètres GET de la requête.

### Exemple:

GET/HTTP/1.1 Host: www.google.com
HTTP/1.1 302 Found Location:
https://mycaptiveportal.com/index.php?usermac=00:af:fe:24:34:53&us erip=192.168.1.1 &......

La présente invention fournit un procédé permettant à un contrôleur SDN de communiquer d'une part avec un équipement utilisateur se trouvant derrière un équipement SDN et d'autre part d'injecter des données dans les flux utilisateurs pour permettre, par exemple, d'injecter dans l'URL de redirection, les informations réseau de l'équipement utilisateur.

Afin qu'un équipement puisse envoyer et recevoir des requêtes/réponses d'un protocole applicatif (par exemple HTTP), il faut que l'équipement discute avec un serveur possédant la même pile protocolaire. Généralement sur Internet, cette pile est composée (de bas en haut) des protocoles suivant : Ethernet, IP, TCP ou UDP, application.

Dans le cas présent, l'équipement souhaitant émettre une requête HTTP doit préalablement initier une connexion TCP. Celle-ci se passe en trois phases :
- un paquet TCP est envoyé par le client vers le serveur avec le flag SYN;
- le serveur répond avec les flags SYN et ACK;
- le client envoie le paquet avec le flag ACK.

Pour communiquer avec l'équipement utilisateur en HTTP, il faut gérer correctement ces échanges au niveau TCP mais aussi en dessous, c'est-à-dire au niveau IP et Ethernet. Concernant la partie applicative serveur, elle doit reposer sur une pile réseau capable de gérer l'Ethernet, l'IP et TCP. Or ici les paquets du client sont directement transmis au contrôleur SDN (qui est une application). Il semble difficile de reprogrammer au sein du contrôleur une pile TCP sachant la complexité de ce protocole et des bugs qui seraient potentiellement introduits.

La présente invention propose donc d'utiliser la pile réseau du système d'exploitation hébergeant le serveur web de redirection.

Il est possible pour un programme du système d'injecter des paquets bruts dans une interface réseau physique ou virtuelle afin que ceux-ci soient transmis sur le lien physique. Ils seront ensuite pris en charge par la pile réseau du système d'exploitation du serveur web de redirection. Ainsi un flot de paquets TCP correctement formé sera remonté jusqu'au serveur applicatif. L'enjeu est alors de correctement transmettre les paquets bruts reçus du client vers l'interface et inversement pour que l'application cliente puisse discuter avec l'application serveur.

Ci-après sera décrit à quoi peut ressembler un paquet brut reçu par le contrôleur SDN. Les informations réseau suivantes sont considérées pour le client:
eth0: hwaddr=00:af:fe:24:34:53 ipaddr=192.168.1.1/24 passerelle par défaut: 192.168.1.254 cache ARP: 192.168.1.254 a0:42:de:fe:43:30

Cet équipement a pour adresse IP 192.168.1.1, il se trouve dans un sous-réseau 192.168.1.0/24 et a comme route par défaut la passerelle 192.168.1.254.

Voici à quoi ressemble un paquet TCP SYN émis par cet équipement :
00:af:fe:24:34:53->a0:42:de:fe:43:30 192.168.1.1-> 134.24.43.5 TCP sport=4444 dport=80 flags=SYN

Pour que ce paquet arrive à l'application serveur, il faut qu'il ait l'air d'être à sa destination, c'est-à-dire que les adresses IP et MAC de destination doivent être celles du serveur de redirection. Les informations réseau suivantes sont considérées pour le serveur de redirection:
tap0: hwaddr=00:34:f3:d2:a2:43 ipaddr=10.0.0.1 passerelle par défaut: 10.0.0.254 arp cache: 10.0.0.254 09:43:21:24:53:24

Le contrôleur SDN modifie le champ Ethernet "Destination address" pour y écrire l'adresse MAC du serveur de redirection (00:34:f3:d2:a2:43) ainsi que le champ IP "Destination address" avec l'adresse IP (10.0.0.1).

Une fois ces modifications faites, les sommes de contrôles de l'en-tête IP et TCP doivent être recalculées puis le paquet peut être transmis à l'interface virtuelle:
00:af:fe:24:34:53->00:34:f3:d2:a2:43 192.168.1.1->10.0.0.1 TCP sport=4444 dport=80 flags=SYN

Un paquet TCP SYN/ACK va ensuite être émis par la partie serveur de redirection (si une application est en écoute sur le port TCP 80) :
00:34:f3:d2:a2:43->09:43:21:24:53:24 10.0.0.1->192.168.1.1 TCP sport=80 dport=4444 flags=SYN/ACK

De la même manière il faut ici effectuer les modifications inverses, c'est-à-dire réécrire les champs destinations avec les informations de l'équipement client et changer l'adresse IP source du paquet avec l'adresse IP de destination du paquet SYN (ici 134.24.43.5) :
00:34:f3:d2:a2:43->00:af:fe:24:34:53 134.24.43.5->192.168.1.1 TCP sport=80 dport=4444 flags=SYN/ACK

On applique ensuite ce mécanisme aux prochains paquets échangés.

Grâce à ce mécanisme, la présente invention met en place un tunnel entre un équipement client appartenant à un réseau local et un serveur situé sur un réseau public.

Il reste désormais à effectuer une injection de données dans la réponse du serveur HTTP. Cette injection consiste à modifier la réponse du serveur HTTP pour y insérer les paramètres réseau de l'équipement client.

Le serveur de redirection est configuré pour répondre avec un code HTTP 30x (redirection) à toutes les requêtes qu'il reçoit. La cible de la redirection importe peu puisqu'elle sera réécrite par le contrôleur SDN. Ainsi par exemple pour une requête HTTP :
GET/HTTP/1.1 Host: 134.24.43.5

Le serveur de redirection répondra :
HTTP 302 Location: https://portailcaptif.com

Le contrôleur SDN détecte ensuite cette réponse du serveur de redirection. La détection est somme toute facile puisqu'il suffit de matcher une réponse du serveur (donc ayant comme port TCP source le port 80) contenant la chaîne de caractères "Location: XXXX".

Une fois le paquet identifié, le contrôleur modifie la partie contenant l'URL de redirection pour y insérer l'URL du portail captif cible, qui peut varier en fonction de l'emplacement de l'utilisateur, du VLAN sur lequel il est connecté etc. À la suite de l'URL du portail, le contrôleur insère les paramètres réseau de l'équipement utilisateur comme paramètres GET de la requête HTTP. La réponse HTTP devient ainsi :
HTTP 302 Location:
   https://www.portailcaptiftest.com/index.php?userip=192.168.1.1&user mac=00:af:fe:24:34:53&...

De ce fait, le navigateur du client va suivre cette redirection et va transmettre ses informations réseau au portail captif.

Il reste un dernier point à gérer, celui des séquences et des acquittements du protocole TCP. En effet, en modifiant le contenu des échanges TCP, le procédé a modifié la taille des paquets échangés. Or le protocole TCP se base sur la taille des paquets pour contrôler la bonne réception des paquets envoyés (acquittement). Du coup le contrôleur SDN doit modifier les numéros de séquences et d'acquittements des paquets suivants la modification:
- le numéro de séquence des paquets envoyés par le serveur de redirection doit être incrémenté par la différence entre la taille finale du paquet modifié et sa taille initiale;
- le numéro des acquittements envoyés par le client doivent être décrémentés par la même différence.

Ainsi le client et le serveur de redirection pourront terminer correctement leurs échanges TCP (qui ne seront par ailleurs pas long puisque le client va initier une nouvelle connexion TCP après avoir reçu la redirection HTTP).

La présente invention a été décrite en référence à un mode de réalisation avantageux, mais il est entendu qu'un homme du métier peut y apporter toutes modifications, sans sortir du cadre de la présente invention telle que défini par les revendications annexées.

## Revendications

1. Procédé de contrôle d'accès à un réseau privé, **caractérisé en ce qu'**il comprend les étapes suivantes:
- fournir au moins un équipement utilisateur, au moins un équipement SDN dans ledit réseau privé, ledit au moins un équipement SDN étant piloté par un contrôleur SDN, un serveur web de redirection disposé dans un réseau accessible par le contrôleur SDN, et un portail captif disposé à l'extérieur dudit réseau privé,
- lorsque ledit équipement utilisateur envoie un paquet d'établissement de connexion TCP (SYN) à un serveur web quelconque, ledit contrôleur SDN modifie les adresses MAC et IP de destinations dudit paquet d'établissement de connexion par les adresses dudit serveur web de redirection,
- lorsque ledit serveur web de redirection envoie sa réponse, ledit contrôleur SDN modifie les adresses MAC et IP de destinations du paquet retour TCP (SYN/ACK) pour les remplacer par les adresses dudit équipement utilisateur,
- lorsque ledit équipement utilisateur envoie une requête HTTP audit serveur web de redirection, ledit serveur web de redirection envoie une réponse HTTP contenant une URL,
- ledit contrôleur SDN détecte ladite réponse HTTP dudit serveur web de redirection et remplace ladite URL par une URL de redirection vers ledit portail captif, à laquelle il ajoute l'adresse MAC et l'adresse IP dudit équipement utilisateur.

2. Procédé selon la revendication 1, dans lequel, lorsque ledit équipement utilisateur envoie un paquet d'établissement de connexion TCP (SYN) à un serveur web quelconque, ledit contrôleur SDN modifie le champ Ethernet "adresse de destination" avec l'adresse MAC dudit serveur web de redirection.

3. Procédé selon la revendication 1 ou 2, dans lequel, lorsque ledit équipement utilisateur envoie un paquet d'établissement de connexion TCP (SYN) à un serveur web quelconque, ledit contrôleur SDN modifie le champ IP "adresse de destination" avec l'adresse IP dudit serveur web de redirection.

4. Procédé selon l'une quelconque des revendications précédentes, dans lequel le contrôleur SDN modifie les numéros de séquences et d'acquittements des paquets suivants la modification:
- le numéro de séquence des paquets envoyés par ledit serveur web de redirection est incrémenté par la différence entre la taille finale du paquet modifié et sa taille initiale;
- le numéro des acquittements envoyés par ledit équipement utilisateur est décrémenté par la même différence.

5. Procédé selon l'une quelconque des revendications précédentes, dans lequel ledit contrôleur SDN ajoute l'adresse MAC et l'adresse IP dudit équipement utilisateur à ladite réponse HTTP dudit serveur web de redirection comme paramètres GET de la requête HTTP.

6. Procédé selon l'une quelconque des revendications précédentes, dans lequel ledit contrôleur SDN communique d'une part avec ledit équipement utilisateur se trouvant derrière ledit équipement SDN, et d'autre part injecte des données dans les flux, notamment pour permettre d'injecter les informations réseau dudit équipement utilisateur dans l'URL de redirection.

7. Procédé selon l'une quelconque des revendications précédentes, dans lequel après redirection, ledit équipement utilisateur termine la connexion TCP avec ledit serveur web de redirection en envoyant un paquet TCP de fin de session (FIN) avec un acquittement pour les données reçues (ACK).
